# EUROPEAN PATENT SPECIFICATION

(11) **EP 2 934 720 B1**
(45) Date of publication and mention of the grant of the patent: **15.06.2016**
(21) Application number: 13811359.2
(22) Date of filing: 18.12.2013
(51) Int. Cl.: B01D 39/16

(54) **FILTRATION MEDIA AND METHODS OF MANUFACTURING THEREOF**
FILTERMEDIA UND HERSTELLUNGSVERFAHREN
MILIEU DE FILTRATION ET SES PROCÉDÉS DE FABRICATION

(30) Priority: 18.12.2012 DK 201270795
(43) Date of publication of application: 28.10.2015
(73) Proprietor: FLSmidth A/S, 2500 Valby (DK)
(72) Inventor: BENESI, Steve C., Novato, California 94947 (US)
(86) International application number: PCT/DK2013/050437
(87) International publication number: WO 2014/094784

(56) References cited:
- EP-A2- 0 825 018
- WO-A1-01/56710
- WO-A1-99/61130
- DE-B- 1 005 037

## Description

### FIELD OF INVENTION

This invention relates to a filter media for a filtration apparatus and a method of manufacturing said filter media. In one embodiment, an impregnated filtration media for extracting liquids from a wet slurry fluid and for producing a substantially dry filter cake of the solid materials in the slurry is provided that utilizes fiber nonwoven or fiber woven fabric material that has a coating applied to it prior to air forcing the coating into the fabric material to create permeability of the composite material. Thereafter, a pressure differential is utilized to impregnate the coating through the fabric material such that the coating is impregnated substantially throughout the entire thickness of the woven material.

### BACKGROUND OF THE INVENTION

A slurry, which typically contains solid particulates suspended in a liquid, is often produced in many industrial processes. Often, it becomes necessary to separate the solids within the slurry from the liquid so that each material may be treated in ways that will make disposal or use of the treated materials both economical and environmentally effective. In most such processes or systems, the slurry material is fed to a filter apparatus which may take many forms including a belt press filter, a vacuum filter, or a pressure filter. In one form of the latter (pressure filtration system), a pair of plate members form an internal space chamber separated by a filter media of some form. The plate members are pressed together at mating surfaces with the filter media positioned between the mating surfaces and spread across the interior space separating one plate from the other plate. Slurry materials are fed into one plate within the chamber defined between the two plates. The filter media blocks the solids of the slurry from moving to the opposite plate to separate the liquid from the solids. The liquid passes to the other plate and is subsequently removed, leaving behind the solids of the slurry accumulated on the filter media. After a sufficient amount of slurry has been treated to accumulate solid materials, the plates are separated, the solids are removed for further processing and the filter media is replaced so that the filtration process can be repeated with a clean filter media. The filtrated fluid and solids are separately used, treated or disposed of in an acceptable manner.

Pressurized gas or vacuum filtration has been used to extract the fluids from the slurry materials via filter media. Vacuum-atmosphere pressure differentials have not typically been effective in creating "dry" solids in the filter cakes they produce and typically only marginally produce solids in filtrate. That is, the "dry" solids still retain moisture and may need to be passed through a heater or dryer to help remove other liquid if that liquid would negatively affect further processing of the solids.

Other technologies used in filter apparatuses have employed elastomeric diaphragms within the chamber with the diaphragm hydraulically (or pneumatically) actuated to create pressure differentials to squeeze out liquids from solids. Such systems may use compressed air (sometimes called "air-fluff") following a hydraulic diaphragm squeeze to drive out interstitial liquid. Such systems are predominantly not as cost effective as pressurized gas filtration, because those systems usually require both an air pressure step as well as the diaphragm squeeze step to produce dry solids. Further, elastomeric diaphragms often limit the chamber size and hence limit the solids cake size that can be produced and the production capacity of a given filtration system. In addition, heat and chemicals may adversely affect elastomeric diaphragms so that these diaphragms may not be suitable for some applications. Also, the diaphragm and air squeeze systems add time to the filtration cycles resulting in lower production rates.

Examples of filter media that may be used in different filtration systems such as slurry filtration systems or filtration systems for separating solid particulates suspended within a gas may be appreciated from U.S. Patent Application Pub. No. 2007/0256984, U.S.- Patent No. 2,839,158, 3,044,957, 4,111,815, 4,130,487, 5,318,831, 6,648,147, and 6,663,684, German Patent No. DE 3628187 C, Chinese Patent Publication Nos. 202179905 U and 1943840 A and Indian Patent No. 211488 B. Often, filter media consists of a material that is covered with a laminate to help improve the filtration capacity of the base material. For instance, U.S. Pat. No. 6,663,684 discloses use of a polyphenylene sulfide web for adhering to a base filter cloth for a dust collecting filter cloth. Such filter media, however, may need replaced relatively quickly as the laminate is worn or degraded. For example, the laminate is only on a surface of the media and after that surface is worn, the media may be much less effective at filtering a fluid having solids contained therein or otherwise need replaced.

I have determined that a new filter media is needed. In one embodiment of my filter media, a fabric material such as felt, non-woven fabric, non-woven polyester fiber, or woven polyester fabric is treated so that the filter material is impregnated throughout a substantial thickness of the fabric material with an impregnation material that enhances the strength, durability, and filtration capacity of the fabric material.

### SUMMARY OF THE INVENTION

A method of making filter media, a filter media making apparatus, and a filter media are provided. The method of making filter media includes covering a first surface of a fabric with a coating, positioning the covered fabric in a chamber, and passing air through the covered fabric to impregnate a portion of the fabric below the first surface with the coating and permeate the impregnated fabric. The air is at a predetermined temperature or temperature range and the air is passed through the fabric at a predetermined pressure or pressure range. The method also includes the step of allowing the impregnated fabric to cure to ensure the coating bonds to the fabric to form the filter media.

The filter media may be configured for filtration systems that separate solids entrained within a liquid from the liquid. The filter media may directly contact the liquid and the solids to block the solids from passing through the filter media while the liquid passes through the filter media. In other embodiments, it is contemplated that the filter media may be configured to separate solids entrained within a gas from the gas.
The portion of the fabric that is below the first surface of the fabric extends along a substantial thickness of the fabric that extends below the first surface. In some embodiments, the portion of the fabric that is below the first surface of the fabric extends along an entire thickness of the fabric that extends below the first surface.

The coating may have a number of different configurations or compositions. For instance, the coating may be comprised of a polymeric material. The coating may also be comprised of at least one filler material that is mixed with the polymer material. Examples of such a filler material may include silica fillers such as flux calcined silicon dioxide or calcined silicon dioxide. Of course, other filler materials may alternatively be utilized to provide a desired property to the composite structure formed from the coating diffusing within and bonding to the fabric material.

In some embodiments of the method, the fabric is covered with the coating prior to the fabric being positioned in the chamber. In other embodiments, the fabric is covered with the coating after being positioned within the chamber. In some embodiments, the chamber may be defined between a first plate and a second plate. At least one of the first and second plates may be moveable to form the chamber and open the chamber.

The method may include other steps as well. For instance, the method may also include cutting the filter media to a predetermined shape for use with a filtration system to separate solid particulates from a liquid. It should be understood that the fabric may be any of a number of possible types of fabric. For instance, the fabric may be felt, a fiber nonwoven material, or other type of nonwoven material. Alternatively, the fabric may be a woven material such as a fiber woven material.

A filtration media is also provided. The filtration media is comprised of a fabric material and a coating diffused within the fabric material and bonded thereto.

In some embodiments of the filtration media, the coating may be diffused throughout the fabric via forcing air through the fabric material that had a first surface of the fabric material covered with the coating to impregnate the fabric material with the coating and permeate the impregnated fabric material. The fabric material may be felt or a non-woven fabric and the coating may be comprised of polymeric material and at least one filler material mixed therein.

Other details, objects, and advantages of the invention will become apparent as the following description of certain present preferred embodiments thereof and certain present preferred methods of practicing the same proceeds.

### BRIEF DESCRIPTION OF THE DRAWINGS

Present preferred filtration media and apparatuses used to make such filtration are shown in the accompanying drawings and certain present preferred methods of practicing the same are also illustrated therein. It should be understood that like reference numbers used in the drawings may identify like components.
Figure 1 is a flow chart illustrating an exemplary embodiment of a method of making a filtration media.
Figure 2 is a block diagram of an exemplary embodiment of a filtration manufacturing apparatus with upper and lower plates in a closed position to define a chamber. An optional coating source and sprayer mechanism is shown in broken line in Figure 2.
Figure 2A is a block diagram of another exemplary embodiment of a filtration manufacturing apparatus with upper and lower plates in a closed position to define a chamber.
Figure 3 is an enlarged fragmentary view of an exemplary embodiment of the filter media.
Figure 4 is a perspective view of an exemplary embodiment of the filter media.
Figure 5 is an enlarged fragmentary view of another exemplary embodiment of the filter media.

### DETAILED DESCRIPTION OF EXEMPLARY EMBODIMENTS

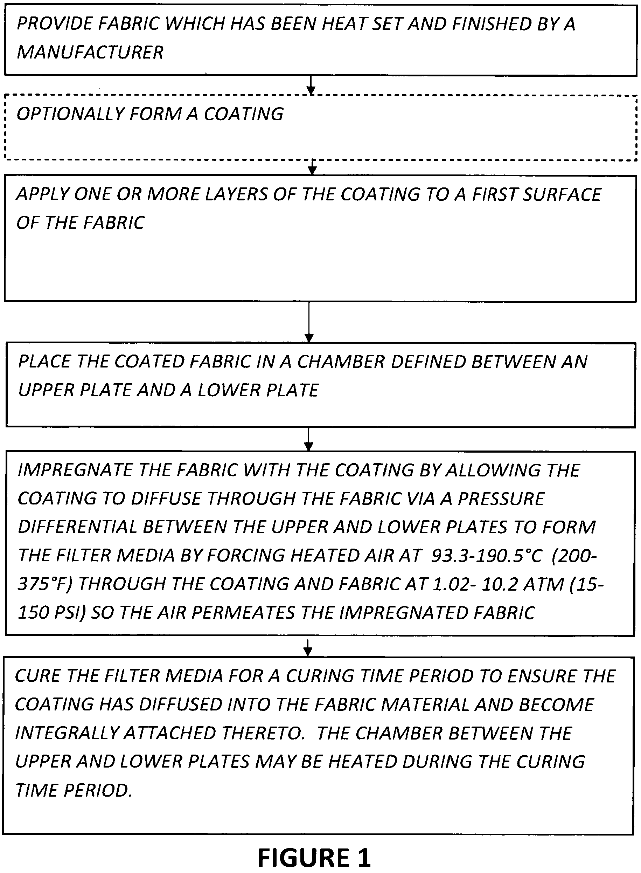

Referring to Figures 1-2A, filter media may be created for use in filtration operations involving one or more types of slurries, such as slurries that include a liquid and particulates having a desired mineral such as copper, iron, or a food element such as corn starch. It is contemplated that embodiments of the filter media may also be utilized to filter a gas such as air having solid particles entrained therein. It should be understood that the filter media may be used to physically block the solid particulates from passing therethrough to separate solid particulates from the fluid in which those particulates are entrained.

A filter media forming apparatus may be utilized to form the filter media. The filter media forming apparatus may include an upper plate 1 and a lower plate 2. The upper and lower plates 1, 2 may each be members that have a particular size and shape for defining a sealed chamber in which a fabric may be positioned. The plates may be polygonal or rounded shape structures that each has a cavity or opening defined therein for forming a chamber 3, for example.

The upper plate 1 and lower plate 2 may each be connected to an actuation mechanism 9, which may cause the upper and lower plates 1, 2 to move close to each other to form a seal that defines a chamber between the upper and lower plates 1, 2 or move into engagement with each other to form the chamber 3. The engagement of the upper and lower plates 1, 2 may result in the plates interlocking with each other or mateably contacting each other to form the chamber 3. The actuation mechanism 9 may also cause the upper and lower plates 1, 2 to move away from each other to open the formed chamber.

The actuation mechanism 9 could be any of a number of suitable devices that meet a particular set of design criteria. For example, the actuation mechanism may include one or more hydraulic cylinders or one or more levers or other moveable members that are connected to the upper and lower plates to cause the plates to move. In other embodiments, one of the upper plate 1 and lower plate 2 may be fixed in its position and the other of the upper plate 1 and lower plate 2 may be attached to the actuation mechanism 9 for movement to form the chamber 3 and open the chamber 3. For instance, the upper plate may be attached to the actuation mechanism 9 and be moved via the actuation mechanism 9 so that the upper plate 1 moves into engagement with or interlocking contact with the non-moving lower plate 2 to form the chamber 3 and subsequently move away from the non-moving plate to open the chamber. Alternatively, the upper plate 1 may move adjacent to the lower plate 2 via the actuation mechanism to contact fabric or a support surface 4 for forming a seal to define the chamber 3. The lower plate 2 may be structured so that a portion of the lower plate 2 defines the support surface 4 on which the fabric rests. In alternative embodiments, a wire mesh or other support surface may be suspended from a top part of the non-moving lower plate 2 to support the fabric 5.

In some embodiments, fabric 5 may be supported on a belt, mesh wire, or other support surface 4 having a plurality of holes formed therein. At least one of the upper and lower plates 1, 2 may be moved via the actuation mechanism 9 so the fabric 5 is positioned between the upper and lower plates 1, 2 and the plates are positioned adjacent to each other such that the plates define a chamber 3 between them by each directly contacting the fabric 5 or support surface 4 supporting the fabric to form a seal to define the chamber 3. Such a formed chamber may be a fully enclosed chamber 3 defined by a peripheral portion of the upper and lower plates 1, 2 as well as at least one of the fabric 5 and support surface 4.

A controller may be communicatively connected to the actuation mechanism to control movement of the actuation mechanism. The controller may include a processor that is communicatively connected to memory that includes one or more programs that are run by the processor to control the functioning of the actuation mechanism 9, for example.

U.S. Patent Application Pub. No. 2007/0256984 discloses a system and apparatus for efficiently filtering between mating filter plates in a manner to substantially reduce energy consumption and operation costs as well as produce an effective separation of liquids and solids from a slurry material. Air, gas, and liquid cycles may be used in a filtration process to produce an initial high pressure squeeze to clear liquid from solids in the slurry and to drive free interstitial liquid from the solids cake. The entirety of U.S. Patent Application Pub. No. 2007/0256984 is hereby incorporated by reference. It should be understood that embodiments of the filter media of the present invention may be advantageously utilized with such an apparatus to perform filtration of slurries. Further, embodiments of the apparatus disclosed in U.S. Patent Application Pub. No. 2007/0256984 may be modified and utilized to manufacture embodiments of the filter media using the steps of the method illustrated in Figure 1 and further discussed above and below.

The fabric 5 such as a fabric formed of non-woven material or a fabric formed of woven material may be positioned between the upper and lower plates 1, 2 when the plates are positioned away from each other and the chamber is opened or not formed. The fabric 5 may be a type of felt such as Southern felt or polyester felt or may be a fabric formed from woven polyester or other woven material that is woven together to form a fabric, for example. After the fabric 5 is positioned between the upper and lower plates 1, 2, the actuation mechanism 9 may cause at least one of the upper and lower plates 1, 2 to move to form the chamber 3 such that the fabric 5 is within the chamber 3.

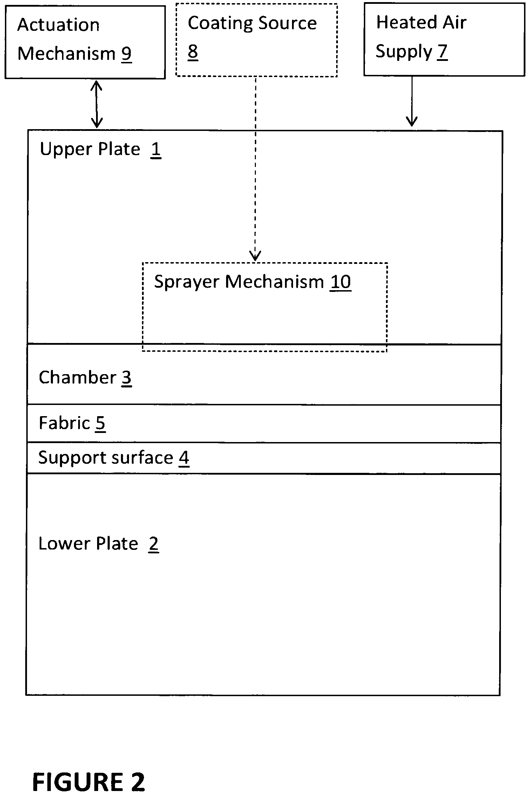

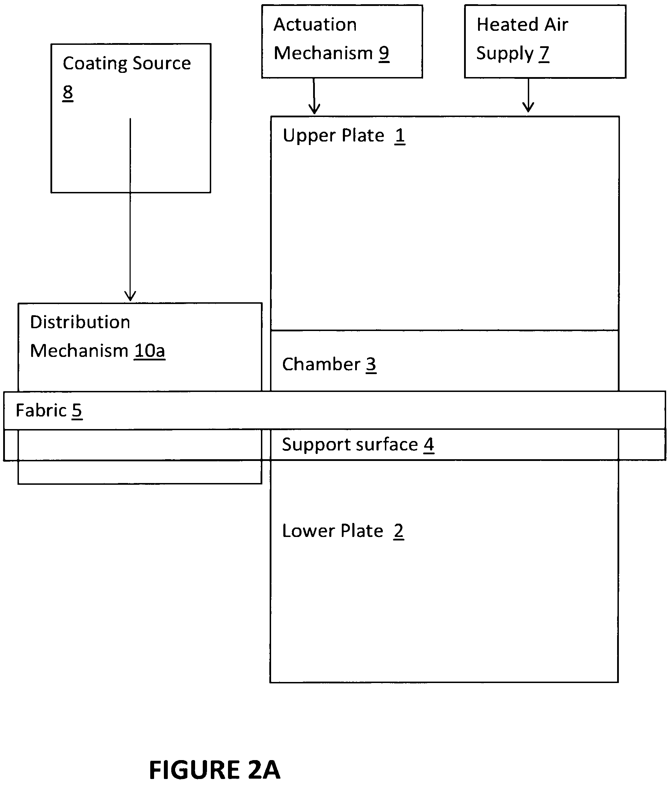

The fabric 5 may be coated with a coating on a first surface of the fabric 5. For instance, the fabric 5 could be positioned horizontally and supported on a support surface 4 and have the coating applied to a top surface of the fabric. The bottom surface of the fabric may rest on the support surface, which may be a portion of the lower plate 1 or on a support surface 4 having a plurality of holes formed therein, for example. The top surface of the fabric may be covered with the coating prior to movement of the upper plate to form the chamber 3 to enclose the coated fabric 5. For instance, as shown in Figure 2A, the coating may be supplied from a coating source 8 to a distribution mechanism 10a such as a distribution trough having a spreader bar. The coating may be applied to the top surface of a fabric passing through the trough via a conveyor belt or other type of moveable support surface 4 and have the applied coating spread along the entire top surface via the spreader bar of the distribution mechanism 10a.

It should be understood that the moveable support surface 4 shown in Figure 2A may move to advance the fabric 5 and coating at certain time intervals. The conveyor belt or other moveable support surface 4 may pause or stop its motion when the chamber is formed via the upper and lower plates 1, 2 and restart its motion after the chamber 3 is opened. Such stopping and starting may permit the fabric to be formed in a relatively continuous process.

Alternatively, the coating may be applied to a first surface of the fabric after the chamber 3 is formed by movement of at least one of the upper and lower plates 1, 2 as may be appreciated from Figure 2. The coating may be applied to the first surface of the fabric 5 via a sprayer mechanism 10 located within the upper plate for example. A coating source 8 may be communicatively connected to the sprayer mechanism 10 of the upper plate 1 via a conduit such as piping and a control valve. The control valve may be opened to feed the coating to the sprayer for application of the coating to the first surface of the fabric. The control valve may subsequently be closed to stop application of the coating to the first surface of the fabric 5.

The coating applied to the fabric may be a polymeric material that includes a mineral filler. For example, the coating may be an elastomeric polymer that is mixed with flux calcined silicon dioxide or calcined silicon dioxide. As another example, the coating may be composed of a polymeric material that includes other type of silica fillers that are configured to cure at room temperature and accelerate curing with heated air (e.g. air that is heated above ambient temperature). In some embodiments, there may be two parts of polymeric material for each part of mineral filler mixed therewith to form the coating material.

The mineral filler and polymeric material may be selected to meet a particular design criteria. For instance, the polymeric material and filler material may each be selected to ensure the formed coating is bondable to the fabric and will remain bonded to the fabric at temperatures, pressures and chemical compositions that it may be exposed to when the formed filter media is used to separate solid particulates from a particular fluid. The polymeric material and filler material may also be selected to ensure the formed coating provides a desired strength, toughness, temperature resistance, resistance to wear, chemical resistance, chamber sealing property, toughness, and adsorbability to the fabric when the coating is bonded to the fabric. In yet other embodiments, the coating may merely be comprised of a polymeric material such as an elastomeric polymer material.

After the first surface is covered with the coating and the coated fabric is within the chamber 3, the fabric 5 may be impregnated with the coating. For instance, a pressure differential may be defined within the chamber 3 by forcing heated air through the chamber at 93.3 to 190.5ºC (e.g. 200-375 ºF) and at between 1.02 and 10.2 atmospheres (e.g. between 15- 150 psi). The pressure differential within the chamber 3 causes the hot air to push the coating through substantially the entire thickness T of the fabric that may extend from the width W and length L of the fabric 5 within the chamber 3. For instance, 60-100% of the fibers of the fabric may be impregnated and coated with the coating due to the application of the pressure differential and hot air. The hot air being pushed through the fabric also ensures that the impregnated fabric is permeable to a fluid so that liquid or gas may pass through the impregnated fabric while the solid particulates entrained within that fluid are blocked by the filter to separate the solids from the fluid.

The impregnated fabric may then be allowed to cure within the chamber for a predetermined period of time. For instance, a curing time of 1-5 minutes may be used to ensure that the coating is able to sufficiently bond to the fabric. Of course, different coatings used in combination with different types of fabric may require different curing times as would be understood by those of ordinary skill in the art. The curing time that is used may be selected to meet a particular set of design criteria. The curing time that is selected preferably ensures that the coating has diffused into the fabric and has become integrally attached thereto (e.g. bonded therewith).

It should be understood that the chamber 3 may be heated during the curing time period. For instance, heated air may be left within the chamber 3 and the chamber may still be left at a predetermined pressure during the curing time period. Alternatively, the hot air may be evacuated from the chamber and the pressure within the chamber may be ambient during the curing time period.

After the impregnated fabric has cured, it may be a filter media 20. The chamber 3 may subsequently be opened and the fabric may be cut or otherwise further processed for use in filtration systems requiring use of a particularly shaped filter media. For example, the filter media so formed and may subsequently be sheared or otherwise cut into smaller shapes for use in multiple different filtration mechanisms of differing shapes and sizes.

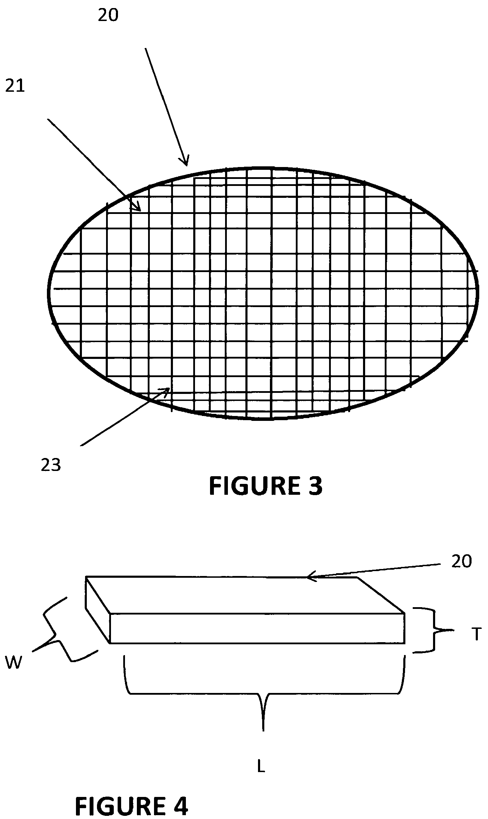

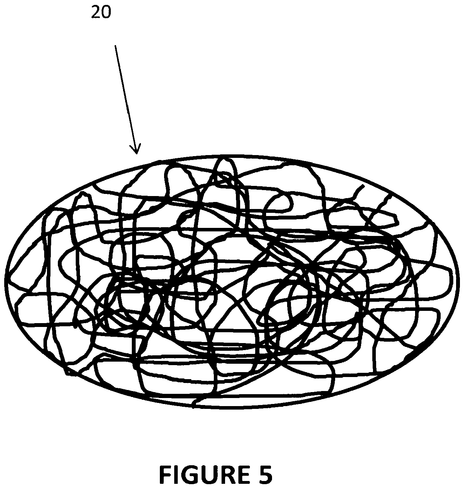

The filter media 20 that is formed may be made of a woven fabric that includes lateral fibers 21 and longitudinal fibers 21 that extend through the woven fabric as may be appreciated from Figure 3. Alternatively, the filter media may be a non-woven fabric and have fibers that are randomly distributed throughout the fabric material as shown in Figure 5. The fibers of the fabric may be bonded to the coating passed through the fiber so that the surface area of the fibers openings defined between the fibers are coated by the coating bonded thereto. Liquid or other fluid that may pass through these openings during filtration operations may therefore directly contact the coating bonded to the fibers, which can help ensure the fabric is more durable so that the filter media 20 can have a longer life as compared to the underlying fabric or a conventional filter media having a laminate.

Testing was conducted on different embodiment of the filter media. The testing showed that embodiments of my filter media outperformed conventional media and was manufacturable at a much lower cost. For example, an embodiment of my filter media composed of felt as the fabric material could be made at a cost that was over 75% less than the cost of conventional filter media. As another example, embodiments of my filter media were found to have substantially better chemical resistance and would be more suitable for food grade use than other conventional filter media. Further embodiments of my filter media permitted improved chamber sealing to occur when upper and lower plates engaged the fabric or support surface to form a seal to define the chamber and had substantially improved heat resistance.

Further a higher throughput and higher solids capture resulted from use of embodiments of my filter media as compared to conventional filter media. For instance, liquid clear times were much improved as compared to conventional filter media and copper, iron and starch solids were captured at higher rates when an embodiment of my filter media was used as compared to when a conventional filter media was used in the filtration of a slurry. A release of the filtered solids was also improved by use of an embodiment of my filter media. For instance, testing showed that corn starch did not even have to be scraped off the filter media to release the filtered starch. Copper and iron solids that were filtered were also shown to have improved release and required substantially less scraping or washing of the filter media to release the captured solids.

Below are examples of different filter media that were formed during the testing. It should be understood that the below examples merely provide examples of different exemplary embodiments of my filter media that may be formed using exemplary embodiments of my method of forming filter media.

### EXAMPLE 1

One square yard of fabric, which was untreated 16 ounce non-woven polyester fiber that was Southern Felt 1PE1601S184 or equivalent was used in the first example. 9 ounces per square yard (e.g. 9 oz/yd² of fabric material) of a two part silicone mixed viscosity 4000 cps polymer (Dow Corning HSII was one type that was used, Momentive RTV615 was another type that was used in different experiments) was mixed with 9 ounces of Dicalite Swimpool (or equivalent), which is a type of flux-calcined silica dioxide filler, to form the coating. The coating was then spread onto a top surface of the fabric while the fabric was positioned on a supported screen. Air heated to 200-375°F (e.g. 93.3 to 190.5ºC) at 15-150 psi (e.g. between 1.02 and 10.2 atmospheres) was forced through the coating into the fabric, and finally through the fabric in order to diffuse the coating through the fabric. This was accomplished by positioning a portion of the coated fabric between an upper plate member having an upper chamber therein and a lower plate member having a lower chamber therein, moving the upper and lower plate members together, forming a seal between the upper and lower plates, providing the upper chamber with hot pressurized air, and blowing the hot pressurized air through the coating and fabric. A heat cure step of approximately 1-5 minutes long was then performed before the filter media was removed from the chamber defined between the upper and lower plates. After the heat curing, a new portion of the coated fabric may be positioned between the plates to form the chamber and have the heated air forced through the coating and fabric for forming the filter media in that new portion of the coated fabric. The formed filter media was then cut into a final shape for use in filtration testing and subsequently used in the above discussed testing.

### EXAM PLE 2

One square yard of fabric, which was untreated 16 ounce non-woven polyester fiber (Southern Felt 1PE1601S184 or equivalent) was used in the second example. 9 ounces per square yard of two part silicone mixed viscosity 4000 cps polymer (Dow Corning HSII was one type that was used, Momentive RTV615 was another type that was used in different experiments) was mixed with 9 ounces of Dicalite Speedflow, which is a type of calcined silica dioxide filler, to form the coating. The coating was then spread onto a top surface of the fabric while the fabric was positioned on a supported screen. Air heated to 200-375°F (e.g. 93.3 to 190.5ºC) at 15-150 psi (e.g. between 1.02 and 10.2 atmospheres) was forced through the coating and into the fabric, and finally through the fabric in order to diffuse the coating through the fabric. This was accomplished by positioning a portion of the coated fabric between an upper plate member having an upper chamber therein and a lower plate member having a lower chamber therein, moving the upper and lower plate members together, forming a seal between the upper and lower plates, providing the upper chamber with hot pressurized air, and blowing the hot pressurized air through the coating and fabric. A heat cure step of approximately 1-5 minutes long was then performed before the filter media was removed from the chamber defined between the upper and lower plates. After the heat curing, a new portion of the coated fabric may be positioned between the plates to form the chamber and have the heated air forced through the coating and fabric for forming the filter media in that new portion of the coated fabric. The formed filter media was then cut into a final shape for use in filtration testing and subsequently used in the above discussed testing.

### EXAMPLE 3

A square yard of woven polyester fabric was used in the third example. The coating that was used included 5.8 ounces of a two part silicone mixed viscosity 4000 cps polymer (Dow Corning HSII and Momentive RTV615 were the types used in different experiments). The coating was spread onto a top surface of the fabric, which was positioned on a supported screen. Air heated to 200-375°F (e.g. 93.3 to 190.5ºC) at 15-150 psi (e.g. between 1.02 and 10.2 atmospheres) was forced through the coating and the fabric in order to diffuse the coating through the fabric. This was accomplished by positioning a portion of the coated fabric between an upper plate member having an upper chamber therein and a lower plate member having a lower chamber therein, moving the upper and lower plate members together, forming a seal between the upper and lower plates, providing the upper chamber with hot pressurized air, and blowing the hot pressurized air through the coating and fabric. A heat cure step of approximately 1-5 minutes long was then performed before the filter media was removed from the chamber defined between the upper and lower plates. After the heat curing, a new portion of the coated fabric may be positioned between the plates to form the chamber and have the heated air forced through the coating and fabric for forming the filter media in that new portion of the coated fabric. The formed filter media was then cut into a final shape for use in filtration testing and subsequently used in the above discussed testing.

### EXAMPLE 4

A square yard of woven polyester fabric was used in the fourth example. The coating that was used included 4.4 ounces of a two part silicone mixed viscosity 4000 cps polymer (Dow Corning HSII was one type that was used and Momentive RTV615 was also used in different experiments). The coating was spread onto a top surface of the fabric while the fabric was positioned on a horizontal support screen. Air heated to 200-375°F (e.g. 93.3 to 190.5ºC) at 15-150 psi (e.g. between 1.02 and 10.2 atmospheres) was forced through the coating, into the fabric, and through the fabric in order to diffuse the coating through the fabric. This was accomplished by positioning a portion of the coated fabric between an upper plate member having an upper chamber therein and a lower plate member having a lower chamber therein, moving the upper and lower plate members together, forming a seal between the upper and lower plates, providing the upper chamber with hot pressurized air, and blowing the hot pressurized air through the coating and fabric. A heat cure step of approximately 1-5 minutes long was then performed before the filter media was removed from the chamber defined between the upper and lower plates. After the heat curing, a new portion of the coated fabric may be positioned between the plates to form the chamber and have the heated air forced through the coating and fabric for forming the filter media in that new portion of the coated fabric. The formed filter media was then cut into a final shape for use in filtration testing and subsequently used in the above discussed testing.

It should be appreciated that a contractor or other entity may provide a filter media, manufacturing apparatus for making filter media, or operate a manufacturing apparatus in whole, or in part, as shown and described. For instance, the contractor may receive a bid request for a project related to designing filter media or operating an apparatus for making filter media, or the contractor may offer to design such a filter media system or a process for a client. The contractor may then provide, for example, any one or more of the devices or features thereof shown and/or described in the embodiments discussed above. The contractor may provide such devices by selling those devices or by offering to sell those devices. The contractor may provide various embodiments that are sized, shaped, and/or otherwise configured to meet the design criteria of a particular client or customer. The contractor may select various materials which are able to meet the design criteria of a particular client or customer. The contractor may subcontract the fabrication, delivery, sale, or installation of a component of the devices disclosed, or of other devices used to provide or manufacture said devices. The contractor may also survey a site and design or designate one or more storage areas for stacking the material used to manufacture the devices, or for storing the devices and/or components thereof. The contractor may also maintain, modify, or upgrade the provided devices. The contractor may provide such maintenance or modifications by subcontracting such services or by directly providing those services or components needed for said maintenance or modifications, and in some cases, the contractor may modify a preexisting pressure filter or other manufacturing apparatus, or parts thereof with a "retrofit kit" to arrive at a modified apparatus comprising one or more method steps, devices, components, or features of the systems and processes discussed herein.

## Claims

1. A method of making filter media comprising:
covering a first surface of a fabric with a coating;
positioning the covered fabric in a chamber;
passing air into the chamber and through the covered fabric to impregnate a portion of the fabric below the first surface with the coating and permeate the impregnated fabric, the air being at a predetermined temperature or temperature range and the air being passed into the chamber and through the covered fabric at a predetermined pressure or pressure range which is above atmospheric;
allowing the impregnated fabric to cure to ensure the coating bonds to the fabric to form the filter media.

2. The method of claim 1 wherein the portion of the fabric that is below the first surface of the fabric extends along a substantial thickness of the fabric that extends below the first surface.

3. The method of claim 1 wherein the portion of the fabric that is below the first surface of the fabric extends along an entire thickness of the fabric that extends below the first surface.

4. The method of claim 1 wherein the coating is comprised of a polymeric material.

5. The method of claim 4 wherein the coating is also comprised of at least one filler material mixed with the polymeric material.

6. The method of claim 5 wherein the at least one filler material is silica-based, and the polymeric material is silicone-based.

7. The method of claim 1 wherein the fabric is covered with the coating prior to the fabric being positioned in the chamber.

8. The method of claim 1 wherein the fabric is covered with the coating after the fabric is positioned in the chamber.

9. The method of claim 1 wherein the chamber is defined between a first plate and a second plate, at least one of the first and second plates being moveable to form the chamber and open the chamber.

10. The method of claim 1 further comprising cutting the filter media to a predetermined shape for use with a filtration system to separate solid particulates from a liquid.

11. The method of claim 1 wherein the fabric is felt or is a non-woven fabric material.

12. Filter media formed by the method of any one of claims 1-11.

## Patentansprüche

1. Verfahren zur Herstellung von Filtermedien umfassend:
Bedecken einer ersten Oberfläche eines Gewebes mit einer Beschichtung;
Positionieren des bedeckten Gewebes in einer Kammer;
Durchführen von Luft in die Kammer und durch das bedeckte Gewebe, um einen Abschnitt des Gewebes unter der ersten Oberfläche mit der Beschichtung zu imprägnieren und das imprägnierte Gewebe zu durchdringen, wobei die Luft eine vorherbestimmte Temperatur oder einen Temperaturbereich aufweist und die Luft in die Kammer und durch das bedeckte Gewebe unter einem vorbestimmten Druck oder Druckbereich durchgeführt wird, der über dem atmosphärischen liegt;
Aushärtenlassen des imprägnierten Gewebes, um die Beschichtungsbindungen mit dem Gewebe zur Bildung der Filtermedien sicherzustellen.

2. Verfahren nach Anspruch 1, wobei der Abschnitt des Gewebes, der sich unter der ersten Oberfläche des Gewebes befindet, sich entlang einer wesentlichen Dicke des Gewebes erstreckt, das sich unter der ersten Oberfläche erstreckt.

3. Verfahren nach Anspruch 1, wobei der Abschnitt des Gewebes, der sich unter der ersten Oberfläche des Gewebes befindet, sich entlang einer gesamten Dicke des Gewebes erstreckt, das sich unter der ersten Oberfläche erstreckt.

4. Verfahren nach Anspruch 1, wobei die Beschichtung ein Polymermaterial umfasst.

5. Verfahren nach Anspruch 4, wobei die Beschichtung auch wenigstens ein Füllmaterial gemischt mit dem Polymermaterial umfasst.

6. Verfahren nach Anspruch 5, wobei das wenigstens eine Füllmaterial silicabasiert ist, und das Polymermaterial siliconbasiert ist.

7. Verfahren nach Anspruch 1, wobei das Gewebe mit der Beschichtung bedeckt wird, bevor das Gewebe in der Kammer positioniert wird.

8. Verfahren nach Anspruch 1, wobei das Gewebe mit der Beschichtung bedeckt wird, nachdem das Gewebe in der Kammer positioniert wird.

9. Verfahren nach Anspruch 1, wobei die Kammer zwischen einer ersten Platte und einer zweiten Platte gebildet wird, wobei wenigstens eine der ersten und zweiten Platten bewegbar ist, um die Kammer zu bilden und die Kammer zu öffnen.

10. Verfahren nach Anspruch 1, weiterhin umfassend Schneiden der Filtermedien in eine vorherbestimmte Form zur Verwendung mit einem Filtrationssystem zum Separieren fester Partikel von einer Flüssigkeit.

11. Verfahren nach Anspruch 1, wobei das Gewebe Filz ist oder ein Vliesgewebematerial ist.

12. Durch das Verfahren nach irgendeinem der Ansprüche 1-11 gebildete Filtermedien.

## Revendications

1. Procédé de fabrication de milieux de filtres comprenant :
Le recouvrement d'une première surface d'un textile avec un revêtement ;
le positionnement du textile recouvert dans une chambre ;
le passage d'air dans la chambre et à travers le textile recouvert pour imprégner une portion du textile sous la première surface avec le revêtement et perméer le textile imprégné, l'air étant à une température ou dans un intervalle de température prédéterminée et l'air passant dans la chambre et à travers le textile recouvert à une pression ou dans un intervalle de pression prédéterminée qui est supérieure à la pression atmosphérique ;
laisser durcir le textile imprégné pour s'assurer que les liaisons de revêtement au textile forment les milieux de filtres.

2. Procédé selon la revendication 1, dans lequel la portion du textile qui est sous la première surface du textile s'étend le long d'une épaisseur substantielle du textile qui s'étend sous la première surface.

3. Procédé selon la revendication 1, dans lequel la portion du textile qui est sous la première surface du textile s'étend le long d'une épaisseur entière du textile qui s'étend sous la première surface.

4. Procédé selon la revendication 1, dans lequel le revêtement est constitué d'un matériau polymère.

5. Procédé selon la revendication 4, dans lequel le revêtement est également constitué d'au moins un matériau de charge mélangé avec le matériau polymère.

6. Procédé selon la revendication 5, dans lequel le au moins un matériau de charge est à base de silice, et le matériau polymère est à base de silicone.

7. Procédé selon la revendication 1, dans lequel le textile est recouvert avec le revêtement avant que le textile soit positionné dans la chambre.

8. Procédé selon la revendication 1, dans lequel le textile est recouvert avec le revêtement après que le textile est positionné dans la chambre.

9. Procédé selon la revendication 1, dans lequel la chambre est définie entre une première plaque et une seconde plaque, au moins une des première et seconde plaques étant déplaçable pour former la chambre et ouvrir la chambre.

10. Procédé selon la revendication 1 comprenant de plus la découpe des milieux de filtres dans une forme prédéterminée pour une utilisation avec un système de filtration pour séparer des matières particulaires solides d'un liquide.

11. Procédé selon la revendication 1, dans lequel le textile est un feutre ou un matériau textile non tissé.

12. Milieux de filtres formés par le procédé selon l'une quelconque des revendications 1-11.
